# EUROPÄISCHE PATENTSCHRIFT

(11) **EP 3 315 394 B1**
(45) Veröffentlichungstag und Bekanntmachung des Hinweises auf die Patenterteilung: **08.01.2020**
(21) Anmeldenummer: 16196018.2
(22) Anmeldetag: 27.10.2016
(51) Int. Cl.: B62K 25/08, B62K 21/20

(54) **GABELSYSTEM**
FORK SYSTEM
SYSTÈME DE FOURCHE

(43) Veröffentlichungstag der Anmeldung: 02.05.2018
(60) Teilanmeldung: 19204481.6
(73) Patentinhaber: smart simplicity, 2504 Biel (CH)
(72) Erfinder: Achenbach, Martin, 2504 Biel (CH)
(74) Vertreter: Maiwald Patent- und Rechtsanwaltsgesellschaft mbH

(56) Entgegenhaltungen:
- DE-U1-202013 001 250
- GB-A- 695 658
- US-A- 4 438 942
- US-A- 4 881 750

## Beschreibung

### Technisches Gebiet der Erfindung

Die Erfindung betrifft ein Gabelsystem und eine Fahrradrahmenanordung für ein zumindest teilweise muskelkraftbetriebenes Fahrrad und ein Herstellungsverfahren für ein solches Gabelsystem.

### Stand der Technik

Im Bereich von leichten Fahrzeugen, insbesondere bei Fahrrädern kam lange Zeit keine Vorderradfederung zum Einsatz. Ursache war zum einen die höheren Kosten sowie das Gewicht, das bei den geringen erreichbaren Geschwindigkeiten sowie eher ebenen Fahrbahnbeschaffenheit noch in keinem Verhältnis zum erzielten Gewinn in Bezug auf Fahrkomfort und Fahrsicherheit stand. Zum anderen wurden oft aus Kostengründen unzureichend dimensionierte Konstruktionen eingesetzt, die nach kurzer Zeit in ihrer Funktionalität stark eingeschränkt waren und den Benutzer am Sinn des baulichen Mehraufwands zweifeln liessen.

Erst durch das Aufkommen der Mountainbikes setzte die Entwicklung von hierfür nötigen performanceorientierten Suspension-Elementen ein. Diese entwickelten sich zu Bauelementen mit grossen Federwegen und über eine Vielzahl von Steuerelementen individuell auf Fahrer und Fahrstil abstimmbaren Betriebsfunktionen.

Aufgrund der somit vorhandenen Produktionslogistik wurde versucht, vereinfachte Varianten der oben beschriebenen performance-orientierten Suspension-Elemente auch im Bereich von komfortorientierten Rädern einzusetzen. Im diesem Marktsegment blieb bei rein muskelkraftbetriebenen Fahrrädern deren Anteil bisher aber gering.

Problematisch ist neben der mitunter unzureichenden Dauerfunktion der Federelemente deren Erscheinungsbild, welches aufgrund des üblicherweise zu Performance-Federelementen gehörenden Aufbaus vom Kunden als nicht stimmig wahrgenommen wird.

Versuche, einen vom Aufbau der performanceorientierten Teleskopgabel, bestehend aus einem die beiden Ausfallenden verbindenden unteren Element, zwei parallelen Standrohren, einer Krone sowie einem Schaftrohr abweichende Struktur zu finden, wurden bereits mehrfach unternommen. Dabei wurde vorrangig versucht, die Längenverstellung der Radführung in das Steuerrohr zu integrieren. Ein derartiger Aufbau ermöglicht ein von der komfortorientierten Zielgruppe bevorzugtes zurückgenommenes Erscheinungsbild der Funktionselemente von Federung und Dämpfung.

Die US 5,494,302 vermittelt eine teleskopische Radführung, welche sich im Inneren des Schaftrohrs befindet und mehrere sich gegenüberliegende Flächen von Innen- und Aussenrohr besitzt, zwischen denen Nadellager angebracht sind. Über diese Flächen und Nadellager wird auch die Lenkkraft übertragen.

Die US 4,438,942, welche als der nächste Stand der Technik angeseshen wird, offenbart ein faltbares, tragbares Fahrrad, bei dem der Lenker, sein langgestrecktes Rohr, die Sitzanordnung, die Pedalkurbel und der Rahmen faltbar sind.

Das grundsätzliche Problem sämtlicher sich innerhalb des Schaftrohrs sich befindlichen Lenkraftübertragungen ist die durch das Schaftrohr bedingte geometrische Nähe zur Lenkachse. Hierdurch erhöhen sich bei gleichbleibend angenommenem Lenkmoment die Kräfte auf die Führungselemente, wodurch hochfeste und damit oft schwere Materialien zum Einsatz kommen müssen. Zum anderen erzeugt das notwendige Lagerspiel bei einfacheren Konstruktionen ein Lenkspiel, das, im Gegensatz zu z.B. PKW von dem Benutzer als unerwünscht empfunden wird.

### Zusammenfassung der Erfindung

Ziel dieser Erfindung ist somit, einen Aufbau zu offenbaren, welcher die Nachteile des oben genannten Stands der Technik eliminiert.

Dies wird erreicht durch das Gabelsystem gemäss Anspruch 1 der Erfindung. Bevorzugte Ausgestaltungen und Weiterbildungen sind Gegenstand der Unteransprüche.

Das Gabelsystem für ein zumindest teilweise muskelbetriebenes Fahrrad umfasst einen Innenschaft, ein Verbindungselement und ein Gabelelement. Das Verbindungselement weist ein erstes Ende zur Verbindung mit dem Innenschaft und ein zweites Ende zur Verbindung mit dem Gabelelement auf, wobei das zweite Ende eine größere radiale Ausdehnung als das erste Ende und als der Innenschaft aufweist.

Das Verbindungselement ermöglicht es, die Kraftübertragung zwischen Innenschaft und Gabelelement unabhängig von Grösse oder Kontur beider Elemente zu bewerkstelligen. Hierdurch entstehen für den Konstrukteur der Gabel deutlich grössere Freiheiten der Gestaltung sowie die Möglichkeit, den Übergangsbereich einfacher und leichter auszuformen.

Das Gabelsystem umfasst ferner eine Sicherungseinheit, die als Kniehebel ausgeformt ist, wobei der obere Hebel mit dem Aussenschaft und der untere Hebel mit dem Verbindungselement verbunden ist. Durch die Ausprägung als Kniehebel lässt sich zum einen eine besonders geringe Bauhöhe der Sicherungseinheit im eingefederten Zustand bewerkstelligen. Zum anderen ergibt sich aus dem grossen Abstand zur Lenkachse ein grosser Hebelarm und daraus folgend eine geringe Belastung und lange Haltbarkeit der Sicherungseinheit.

Der Kniehebel ist ferner so ausgeformt, dass beim Einfedern unabhängig von der Länge der einzelnen Hebelarme sich die mittlere Hebelachse zunehmend stärker nach unten bewegt. In vollständig eingefahrenem Zustand bildet die Mittelachse, als Winkelhalbierende, gebildet aus den drei Hebelachsen, mit der Lotrechten auf die Längsachse des Innenschafts einen spitzen Winkel nach unten. Da das Vorderrad in Einbaulage im hinteren Bereich des Gabelelements schon wieder deutlich abfällt, kann der beschriebene Winkel mindestens 10° betragen und dadurch der Kniehebel eine deutlich erhöhte Freigängigkeit z.B. zum Unterrohr des Rahmens aufweisen, ohne mit dem Vorderrad oder einem Schutzblech zu kollidieren.

Durch den erfindungsgemässen Aufbau wird zudem ein ästhetisch zurückhaltender Gesamtaufbau ermöglicht.

Das erfindungsgemässe Gabelsystem bzw. die Vorderradführung wird vorzugsweise für zumindest teilweise muskelbetriebene Fahrräder eingesetzt. Unter dem Begriff «zumindest teilweise muskelbetriebene Fahrräder» werden Einspurfahrzeuge wie Motorräder, Fahrräder oder E-Bikes verstanden.
In einer Ausfuhrungsform ist das Verbindungselement ein separates Bauteil. Dies bedeutet, dass es nicht einstückig mit dem Innenschaft oder dem Gabelelement ist. Die separate, nicht einstückige Bauweise des Verbindungselements hat die Vorteile, dass Verbindungselement und Innenschaft unabhängig vom Gabelelement gefertigt werden können. Weiterhin wird der Innenschaft nicht durch Umform- oder Fügeprozesse wie z.B. Schweissen in seiner geometrischen Präzision und damit einwandfreien Funktion beeinträchtigt.

Das Verbindungselement kann in den Innenschaft eingefügt und/oder von aussen mit dem Innenschaft verbunden werden.

Die Verbindung zwischen Innenschaft und Verbindungselement kann unlösbar z.B. durch Kleben oder Löten oder lösbar sein.

In einer bevorzugten Ausführungsform ist das zweite Ende des Verbindungselements lösbar an dem Gabelelement befestigt. Die lösbare Verbindung kann eine Steckverbindung, eine Bajonettverbindung oder ähnliches sein. Die Steckverbindung ermöglicht ein Einschieben des Verbindungselements in das Gabelelement, vorzugsweise aus einer Richtung, die nicht eine Hauptbelastungsrichtung des Gabelsystems ist. Hierdurch kann eine entsprechend materialsparende Gesamtkonstruktion erreicht werden. Die Bajonettverbindung ermöglicht ein Einsetzen des Verbindungselements von oben in das Gabelelement. Durch Drehen um einen definierten Winkel um die Längsachse des Innenschafts wird die formschlüssige Verbindung von Verbindungselement und Gabelelement erzielt. Dieser Verbindungstyp erzielt eine besonders kompakte Bauweise mit einer Mehrzahl an Kraftübertragungsbereichen. Die Vorteile der lösbaren Verbindung sind, dass die funktionale Baugruppe, bestehend aus Innenschaft, Verbindungselement sowie daran befestigten weiteren Bauelementen zeitlich wie räumlich unabhängig vom Gabelelement gefertigt werden können. So kann das Gabelelement ebenfalls vom Rahmenhersteller produziert werden und sich somit auch in gestalterischer Hinsicht wesentlich besser als bei bisherigen Lösungen in das Gesamterscheinungsbild des Fahrzeugs einfügen. Zudem besitzt die funktionale Baugruppe ein gegenüber existierenden Bauformen stark reduziertes Transport- und Lagervolumen.

In einer Ausführungsform umfasst das Gabelsystem weiterhin einen Aussenschaft und eine Sicherungseinheit. Der Innenschaft ist axial beweglich zumindest teilweise in den Aussenschaft gesteckt. Die Sicherungseinheit verhindert eine Rotation zwischen dem Aussenschaft und dem Gabelelement. Die Längenveränderung zur Bewerkstelligung der Federungsfunktion wird hier durch das Gleiten des Innenschafts innerhalb des Aussenschafts erzielt. Da gegenüber existierenden Teleskopgabeln mit je 2 Innen- und Aussenschäften in Form von Stand- und Tauchrohren lediglich die Hälfte der Bauelemente benötigt wird, ist die erfindungsgemässe Konstruktion einfacher, leichter und günstiger herzustellen. Durch die Verwendung einer separaten Sicherungseinrichtung wird eine geometrisch einfache und somit günstige Ausformung von Innen- und Aussenschaft ermöglicht. So könnte der Innenschaft aus zylindrischem Stangenmaterial ohne wesentliche weitere Aussenbearbeitung gefertigt sein. Am dem Verbindungselement zugewandten Ende des Aussenschafts könnte eine Dichtung zwischen Innen- und Aussenschaft ein sich im Zwischenraum zwischen beiden Elementen sich befindlichen Schmierstoff auch im Betrieb und verschiedenen Betriebszuständen dauerhaft an der gewählten Position halten.

In einer Ausführungsform ist der obere Hebelarm gegenüber dem unteren Hebelarm länger ausgeführt. Beim zunehmenden Einfedern des Gabelsystems bewegt sich die mittlere Hebelachse stärker als die obere Hebelachse nach unten. Hierdurch verringert sich das Kollisionsrisiko des Kniehebels mit vom erfindungsgemässen Gabelsystem unabhängigen Fahrzeugelementen wie z.B. dem Rahmen.

In einer Ausführungsform besitzt der Aussenschaft im Bereich der oberen Lagereinrichtung (also in Richtung des Fahrradlenkers) einen geringeren, sich verjüngten Querschnitt als im Bereich der unteren Lagereinrichtung. Hierdurch lassen sich Anbauteile, wie z.B. Vorbauten zur Verbindung von Lenker und Aussenschaft, auch in bereits handelsüblichen Grössen am Fahrzeug verwenden.
In einer Ausführungsform ist ein Abstand zwischen einem Ende des Innenschafts und einer Oberkante einer Raddurchgangsöffnung des Gabelelements kleiner als 20 mm und bevorzugt kleiner als 10 mm. Der Innenschaft dringt dabei nicht in die sich zwischen Verbindungselement und Oberkante der Raddurchgangsöffnung befindlichen Bereich, welcher zumindest abschnittsweise durch das Gabelelement gefüllt ist, ein. Der beschriebene geringe Abstand ermöglicht einen Aufbau, der sich von einer ungefederten Ausführung nur geringfügig entfernt. Hierdurch lassen sich zum einen auch existierende Rahmengeometrie ohne Umkonstruktion in ästhetisch und fahrdynamisch befriedigender Weise mit einer erfindungsgemässen Vorderradführung versehen, zum anderen lässt sich schon bei der Grundkonstruktion des Fahrzeugs ein formales Konzept finden, welches die Federungsfunktion gegenüber anderen Aspekten zurücknimmt.

In einer Ausführungsform weist das Material, aus dem das Verbindungselement gefertigt ist, ein um mindestens 20% höheren E-Modul auf als das Material, aus dem das Gabelelement besteht. Hierbei lässt sich das Verbindungselement aus Stahl oder Titan fertigen, während für das Gabelelement auch einfachere und günstigere Werkstoffe wie Aluminium, Magnesium oder Kunststoff verwendet werden können. Da das Verbindungselement aufgrund des höheren E-Moduls auch höhere Spannungen verkraften kann, lässt sich das damit verbundene Gabelelement entsprechend einfacher und leichter ausprägen.

In einer Ausführungsform weist der Aussenschaft im Bereich einer oberen Lagerung in einem Teil eines Fahrradrahmens einen Aussendurchmesser größer 32 mm, bevorzugt größer 35 mm und weiter bevorzugt größer 40 mm auf. Hierdurch lässt sich eine besonders steife Gesamtkonstruktion erzielen. Weiterhin kann so auch die Einbauhöhe verringert werden, da der Innenschaft beim Einfedern bis in den Bereich der Vorbauklemmung nach oben fahren kann.

In einer Ausführungsform erfolgt eine Kraftübertragung vom Innenschaft über das Verbindungselement erst radial nach außen und dann auf das Gabelelement.

Hierdurch lässt sich der Abstand zwischen einem Ende des Innenschafts und einer Raddurchgangsöffnung besonders geringhalten, da auf diese Weise im Bereich von Reifen oder

Schutzblech gar kein Material des Gabelelements vorhanden ist und trotzdem eine ausreichende Steifigkeit der Gesamtkonstruktion erreicht wird.

In einer Ausführungsform befindet sich ein oberes Ende des Innenschafts in wenigstens einer Fahrposition oberhalb der Mitte eines Bereichs, in dem eine Verbindungseinheit zwischen dem Aussenschaft und einer Lenkvorrichtung mit dem Aussenschaft in Wirkverbindung ist. Das obere Ende des Innenschafts taucht somit weit in den Bereich ein, in dem der Vorbau den Aussenschaft umschliesst. Es wäre aber auch eine wirkmässige Verbindung zwischen Vorbau und Aussenschaft möglich und angedacht, in der der Vorbau nur teilweise den Aussenschaft kontaktiert. Durch die weitgehende Nutzung dieses Überlappungsbereichs als Verfahrweg der Innenführung kann die Gesamtlänge des Aussenschafts und damit die Einbauhöhe der Vorderradführung im Rahmen besonders klein gehalten werden, ohne an Stabilität oder Federweg einzubüssen.

Die Erfindung umfasst weiterhin eine Fahrradrahmenanordung für ein zumindest teilweise muskelbetriebenes Fahrrad. Die Fahrradrahmenanordung umfasst ein Gabelsystem wie oben beschrieben und einen Fahrradrahmen. Das Gabelsystem ist relativ zum Fahrradrahmen drehbar und ein Gabelelement des Gabelsystems ist relativ zum Fahrradrahmen entlang einer Längsachse des Gabelsystems verschiebbar gelagert.

Gegenüber existierenden Konstruktionen ermöglicht die vorliegende Erfindung einen leichteren und kompakteren Aufbau. Ferner besteht die Möglichkeit, die Funktionselemente von Federung und Dämpfung unabhängig von der Gabeleinheit zu fertigen und durch deren kompaktes Aussenmass sowie geringes Gewicht entsprechend niedrige Lager- und Transportkosten zu realisieren.

Da das Gabelelement keine für die Federung und Dämpfung relevanten Bauelemente aufweist, besitzt dieses grosse formale Freiheiten und könnte z.B. vom Rahmenhersteller passend zum Gesamterscheinungsbild des Fahrzeugs mitproduziert werden, ohne auf die bei existierende Konstruktionen häufig zu findenden werkzeugintensiven Druckgusslösungen zurückgreifen zu müssen. Ebenso könnte ein Fahrzeughersteller mit geringem Investitionsaufwand die Radgrösse oder Reifenbreite variieren.

Mithilfe des Verbindungselements lässt sich gegenüber dem Stand der Technik eine geringere Einbauhöhe des Gesamtsystems im Fahrzeug erzielen, was ein z.B. für Citybikes vorteilhaftes Erscheinungsbild ermöglicht, welches lange Federwege nicht mehr in den Vordergrund stellt.

Die Erfindung umfasst weiterhin ein Herstellungsverfahren für ein Gabelsystem mit den folgenden Schritten (nicht notwendigerweise in dieser Reihenfolge): Anfügen eines ersten Endes eines Verbindungselements an einen Innenschaft und Verbinden eines zweiten Endes des Verbindungselements mit einem Gabelelement. Das zweite Ende weist eine größere radiale Ausdehnung als das erste Ende und als der Innenschaft auf.

Durch die separate Herstellung von Innenschaft und Verbindungselement wird sichergestellt, dass der Innenschaft in seiner geometrischen Präzision nicht durch einen Umform- oder thermischen Fügeprozess negativ beeinflusst wird. Zudem ermöglicht die separate Fertigung von Verbindungselement und Gabelelement die Verwendung unterschiedlicher Materialien hierfür sowie auch voneinander unabhängige Produktionsstätten.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. Es zeigen:
Fig. 1 eine Vorderradführung im eingebauten Zustand gemäss einem Ausführungsbeispiel der Erfindung;
Fig. 2 die Vorderradführung von Fig. 1 mit getrennter oberer Baugruppe und Gabelelement;
Fig. 3 die obere Baugruppe im Einbauzustand im Hauptrahmen
Fig. 4 Die Wirkmässige Verbindung von oberer und unterer Baugruppe anhand der wesentlichen involvierten Bauteile gemäss einem weiteren Ausführungsbeispiel;
Fig. 5 den Schnitt durch Fig. 4
Fig. 6 die perspektivische Ansicht eines weiteren Ausführungsbeispiels, ohne Schutzvorrichtung (Faltenbalg);
Fig. 7 die Vorderradführung von Fig. 6 mit getrennter oberer Baugruppe und Gabelelement;
Fig. 8 die perspektivische Ansicht eines weiteren Ausführungsbeispiels, ohne Schutzvorrichtung (Faltenbalg);
Fig. 9 die Vorderradführung von Fig. 8 mit getrennter oberer Baugruppe und Gabelelement;
Fig. 10 den Schnitt durch die untere Baugruppe aus Fig. 8,9 in vertikaler Mittelebene in Fahrtrichtung;
Fig. 11 die perspektivische Ansicht eines weiteren Ausführungsbeispiels, ohne Schutzvorrichtung (Faltenbalg);
Fig. 12 die Vorderradführung von Fig. 11 mit getrennter oberer Baugruppe und Gabelelement;
Fig. 13 den Schnitt durch die untere Baugruppe aus Fig. 11,12 in vertikaler Mittelebene in Fahrtrichtung;
Fig. 14 die perspektivische Ansicht eines weiteren Ausführungsbeispiels, ohne Schutzvorrichtung (Faltenbalg);
Fig. 15 die Vorderradführung von Fig. 14 mit getrennter oberer Baugruppe und Gabelelement;
Fig. 16 den Schnitt durch das Gabelelement aus Fig. 14,15 in vertikaler Mittelebene in Fahrtrichtung;
Fig. 17 den Schnitt durch das Gabelelement aus Fig. 14,15 rechtwinklig zur vertikalen Mittelebene in Fahrtrichtung;
Fig. 18 die perspektivische Ansicht eines weiteren Ausführungsbeispiels, ohne Schutzvorrichtung (Faltenbalg);
Fig. 19 die Vorderradführung von Fig. 18 mit getrennter oberer Baugruppe und Gabelelement;
Fig. 20 die Seitenansicht der Vorderradführung von Fig. 18 mit Angabe der Schnittebene;
Fig.21 ein Detailausschnitt des Schnitts gemäss Fig. 20;
Fig. 22 das Verbindungselement aus Fig. 18 in perspektivischer Darstellung;
Fig. 23 die perspektivische Ansicht eines weiteren Ausführungsbeispiels, ohne Schutzvorrichtung (Faltenbalg);
Fig. 24 die Vorderradführung von Fig. 23 mit getrennter oberer Baugruppe und Gabelelement;
Fig. 25 ein vergrössertes Detail aus Fig. 24;
Fig. 26 einen Schnitt durch die Vorderradführung gemäss Fig. 23 in vertikaler Längsebene in Fahrtrichtung;
Fig. 27 ein Detailausschnitt von Fig. 26;
Fig. 28 den Schnitt durch die Vorderradführung gemäss Fig. 23 in vertikaler Längsebene in Fahrtrichtung in ausgefedertem Zustand;
Fig. 29 den Schnitt durch die Vorderradführung gemäss Fig. 23 in vertikaler Längsebene in Fahrtrichtung in eingefedertem Zustand;
Fig. 30 den Schnitt durch die Vorderradführung gemäss Fig. 23 in vertikaler Längsebene in Fahrtrichtung in eingefedertem Zustand;
Fig. 31 ein Detailausschnitt von Fig. 30;
Fig. 32 den Schnitt durch die Vorderradführung gemäss Fig. 1 in vertikaler Längsebene in Fahrtrichtung in ausgefedertem Zustand;
Fig. 33 ein Detailausschnitt von Fig. 32;
Fig. 34 Die Wirkmässige Verbindung von oberer und unterer Baugruppe anhand der wesentlichen involvierten Bauteile gemäss einem weiteren Ausführungsbeispiel;
Fig. 35 den Schnitt durch Fig. 34;
Fig. 36 Die Wirkmässige Verbindung von oberer und unterer Baugruppe/Gabelelement anhand der wesentlichen involvierten Bauteile gemäss einem weiteren Ausführungsbeispiel;
Fig. 37 den Schnitt durch Fig. 37;

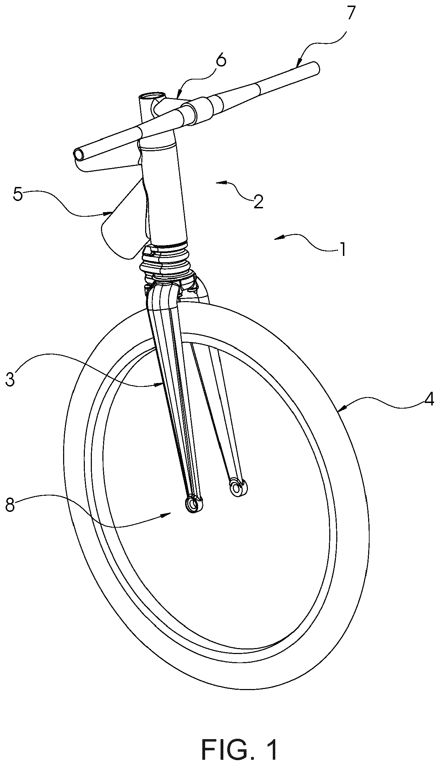

Figur 1 zeigt ein erfindungsgemässes Gabelsystem 1 bzw. eine erfindungsgemässe Vorderradführung 1 gemäss der ersten Ausführungsform der Erfindung in einer perspektivischen Ansicht. Diese Vorderradführung besteht im Wesentlichen aus einer oberen Baugruppe 2 und einer oberen Baugruppe bzw. einem Gabelelement 3, wobei beide Baugruppen im mittleren Bereich der Gesamtkonstruktion miteinander verbunden sind. Das Vorderrad 4 wird über die Radachse 8 (nicht dargestellt) mit dem Gabelelement 3 verbunden. Im Fahrbetrieb wird die Lenkkraft über die Lenkvorrichtung 7, die Verbindungseinrichtung 6, die obere Baugruppe 2, sowie dem Gabelelement 3 auf das Vorderrad 4 übertragen. Die obere Baugruppe 2 ist dabei zumindest abschnittsweise vom Hauptrahmen 5 (hier nur als vorderer Rahmenabschnitt dargestellt) verdeckt.

Die obere Baugruppe 2 führt im Wesentlichen die Funktionen Federung, Dämpfung, längenveränderliche Führung sowie Lenkkraftübertragung im längenvariablen Bereich aus. Das Gabelelement 3 stellt somit lediglich eine starre Verbindung zwischen unterem Endbereich der oberen Baugruppe 2 sowie der Radachse 8 dar.

Hierdurch ist das Gabelelement gegenüber existierenden Federgabelkonstruktionen vereinfacht herzustellen, kann mit geringem Aufwand vom Hersteller des Hauptrahmens 5 mit übernommen werden und aus leichten Materialien wie Aluminium, Magnesium, Titan oder Carbon bestehen. Die Fertigung des Gabelelements kann hierbei in ein Schweiss-, Giess-, Druckgiess-, Spritzgiess-, Laminier-, oder Klebeprozess erfolgen.

Existierende Federgabeln sind zum grössten Teil als Teleskopgabeln mit je zwei Stand- und Tauchrohren als innere und äussere Elemente ausgeführt. Da sich in der erfindungsgemässen Vorderradführung 1 alle wichtigen Funktionselemente kompakt in der oberen Baugruppe 2 versammeln und z.B. nur ein Innenschaft 10 in einem Aussenschaft 9 gleitet, werden hierfür entsprechend weniger Bauelemente benötigt, was somit auch in einem deutlich reduzierten Gesamtgewicht der erfindungsgemässen Vorderradführung resultiert.
Die obere Baugruppe 2 kann durch ihr im Vergleich zu existierenden Gesamtfedergabeln wesentlich kompakterem Transportmass und geringerem Gewicht zu wirtschaftlichen Bedingungen auch räumlich unabhängig vom Hersteller der unteren Baugruppe/ Gabelelement erstellt werden.
Zum sicheren Verbinden von oberer Baugruppe 2 und Gabelelement 3 können im Kontaktbereich besonders bevorzugt Schrauben angebracht sein. Es ist aber auch eine Verbindung über Bayonettverschlüsse oder eine Vernietung bevorzugt und vorstellbar.

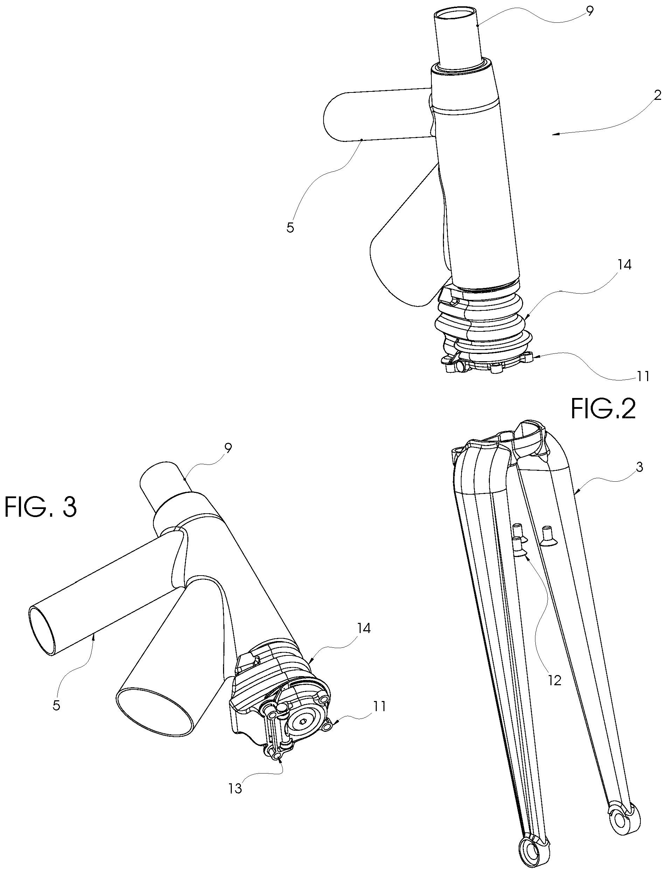

Figur 2 zeigt die erfindungsgemässe Vorderradführung 1 aus Figur 1 mit von der oberen Baugruppe 2 getrenntem Gabelelement 3. In dieser ersten Ausführungsform erfolgt die Verbindung und Sicherung von Gabelelement 3 an der oberen Baugruppe 2 über Fixierelemente 12, hier als Schrauben ausgebildet, welche in das Verbindungselement 11, welches sich im unteren Bereich der oberen Baugruppe 2 befindet, wirkmässig eingreifen. Zum Schutz von Funktionselementen, welche sich im unteren Bereich der oberen Baugruppe 2 ausserhalb des Hauptrahmens 5 befinden, ist hier eine Schutzvorrichtung 14 in Form eines elastischen Faltenbalgs angebracht. Der obere Abschnitt des Aussenschafts 9 der oberen Baugruppe 2 reicht dabei über den Hauptrahmen 5 hinaus, um in diesem Bereich das Verbindungselement 6 (nicht dargestellt) aufzunehmen. Das Verbindungselement 11 ist bevorzugt aus einem höherfesten Material wie Stahl, Titan oder Ähnlichem zum weiträumigen Verteilen der Lasten zwischen oberer und untere Baugruppe.

Figur 3 zeigt eine Untersicht der im Hauptrahmen 5 verbauten oberen Baugruppe 2. Die Verbindungseinheit 11 besitzt hierzu bevorzugt mehrere, besonders bevorzugt 4 Öffnungen 13 zur wirkmässigen Verbindung mit je einem Fixierelement.

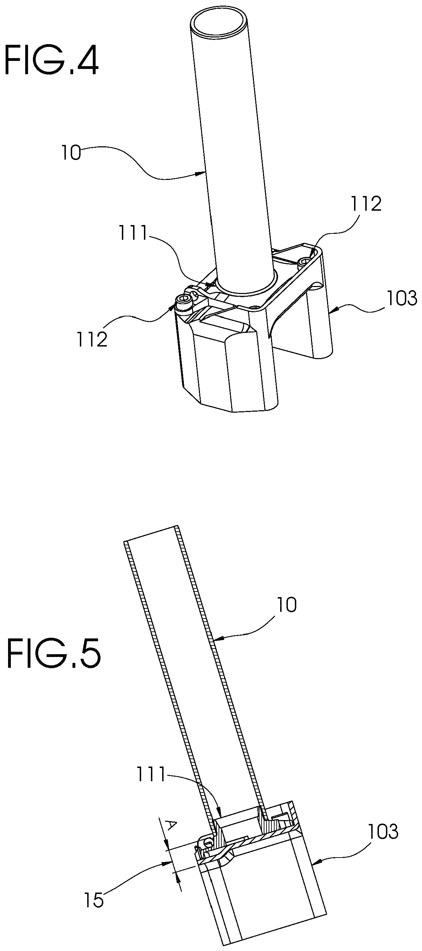

Figur 4 zeigt die relevanten Elemente der Kraftübertragung zwischen oberer Baugruppe 2 und Gabelelement 3 einer erfindungsgemässe Vorderradführung 1 gemäss einer zweiten Ausführungsform. Das Gabelelement 103 (hier nur als deren oberes Ende dargestellt) überträgt Betriebskräfte hierbei über von oben eingebrachte Fixierelemente 112 auf das Verbindungselement 111. Das Verbindungselement 111 und dem Innenschaft 10, welches im Wesentlichen zylindrisch ausgeprägt ist, stellen Elemente der oberen Baugruppe dar.

Figur 5 zeigt einen Schnitt analog Figur 4. Hier wird ersichtlich, dass durch Übertragung der Kräfte von Gabelelement 103 auf Innenschaft 10 über das Verbindungselement 111 der Abstand 15 bzw. die Bauhöhe in axialer Richtung 15 des Innenschafts 10 besonders gering ausfallen kann.

In manchen Fällen wird das innere Element in die untere Baugruppe eingepresst oder eingeschraubt. Fällt die Höhe des Einpressbereichs hier im Verhältnis zum Durchmesser des Innenschafts zu gering aus, ist aus der Praxis bekannt, dass die Pressverbindung bei starken Wechsellasten zu Mikrobewegungen und daraus resultierender unerwünschter Geräuschbildung in Form von Knacken neigen kann. Eine sichere und dauerhaft 'geräuschfreie' Verbindung wird erst bei einer Einpresshöhe von 75% - 100% des Aussendurchmessers des inneren Elements erreicht. Da bei der erfindungsgemässen Vorderradführung im Gegensatz zu handelsüblichen Teleskopfedergabeln nur ein einziger Innenschaft vorhanden ist, muss dieser im Durchmesser entsprechend grösser dimensioniert sein. Entsprechend würde bei einer Ausführung mit in die untere Baugruppe verpresstem Innenschaft ein unerwünscht starker Aufbau in vertikaler Richtung erfolgen, welcher die Gesamtbauhöhe der Konstruktion unvorteilhaft steigert. Die wird durch die erfindungsgemässe Ausführung mittels Verwendung eines Verbindungselements vermieden.

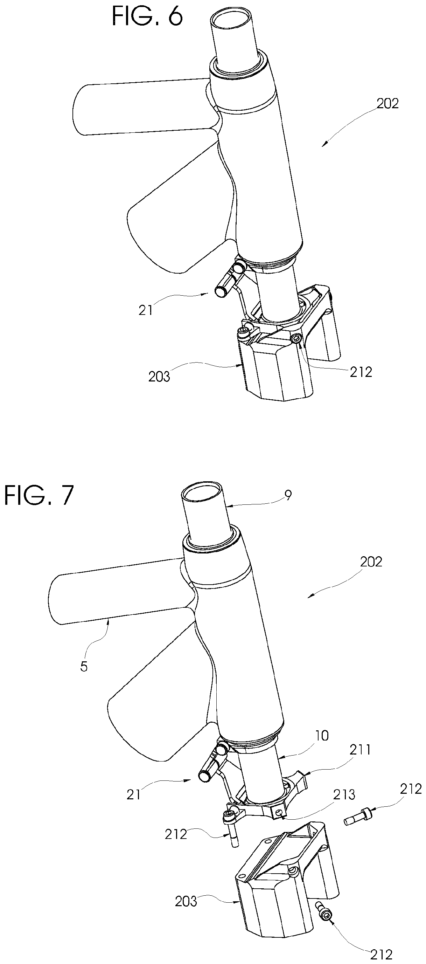

Figur 6 zeigt eine weitere Ausführungsform der erfindungsgemässen Vorderradführung 1 in Betriebszustand ohne Schutzvorrichtung 14, das Gabelelement 203 nur als deren oberes Ende dargestellt. Die wirkmässige Verbindung zwischen Gabelelement 203 und oberer Baugruppe 202 wird hier unter anderem auch durch Fixierelemente 212 erreicht, welche im Wesentlichen nicht parallel zur Längsachse des inneren Elements 10 angeordnet sind. Im in Fahrtrichtung hinteren Bereich ist eine Sicherungseinrichtung 21 in Form eines Kniehebels angebracht, welcher eine Winkelveränderung um die Längsachse von Aussenschaft 9 und Innenschaft 10 im Wesentlichen unterbindet.

Existierende Konstruktionen versuchen häufig, durch das Verlagern in den Innenbereich des Innenschafts ein besonders aufgeräumtes Erscheinungsbild zu erzielen. Dadurch wird allerdings der wirksame Radius der Sicherungseinrichtung so klein, dass diese aus hochfesten und damit schweren Materialien gefertigt werden muss und häufig trotzdem nicht spielfrei und leichtgängig ist.

Als einzige Ausnahme gilt hier die Headshok-Federung der Firma Cannondale, welche Innen- und Aussenschaft auf Nadellagern relativ zueinander lagern und damit eine ausgezeichnete Performance erzielen. Nachteilig ist hier der sehr hohe Fertigungsaufwand verbunden mit aufwendiger spielfreier Montage.

Im Gegenteil hierzu ist die Sicherungseinrichtung 21 der erfindungsgemässen Vorderradführung 1 durch ihre deutliche Beabstandung von der Lenk- und damit Hebelachse relativ geringen Kräften ausgesetzt, was zum einen eine leichtere Konstruktion ermöglicht, zum anderen der Langlebigkeit förderlich ist.

Figur 7 zeigt die erfindungsgemässe Vorderradführung 1 aus Figur 1 mit von der oberen Baugruppe 202 getrenntem Gabelelement 203.

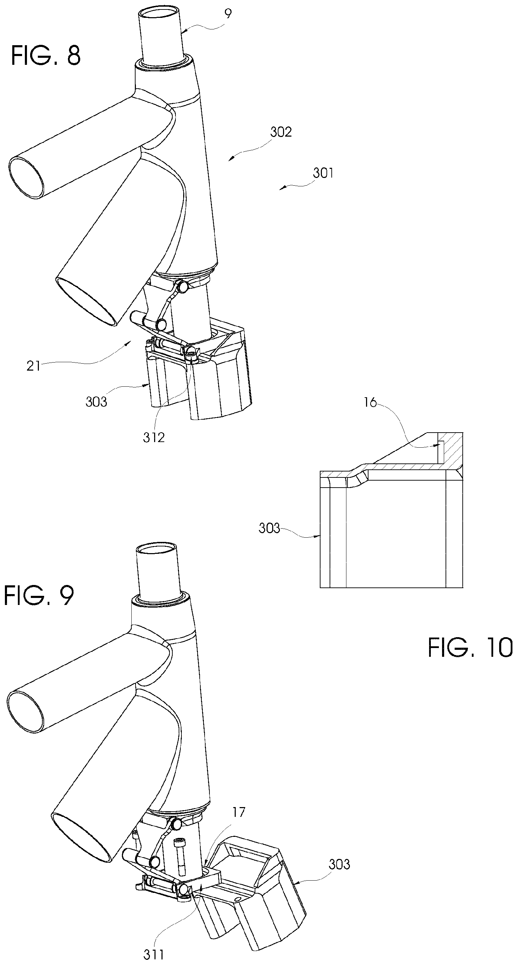

Figur 8 zeigt eine weitere Ausführungsform der erfindungsgemässen Vorderradführung 1 in Betriebszustand ohne Schutzvorrichtung 14, das Gabelelement 303 nur als deren oberes Ende dargestellt. Die wirkmässige Verbindung zwischen Gabelelement 303 und oberer Baugruppe 302 wird hier im in Fahrtrichtung vorderen Bereich als Steckverbindung ausgeführt.

Figur 9 zeigt die erfindungsgemässe Vorderradführung 1 aus Figur 8 mit von der oberen Baugruppe 202 getrenntem Gabelelement 203, wobei die Vorderkante 17 der Verbindungseinrichtung 311 sichtbar wird.

Figur 10 zeigt den Schnitt durch das Gabelelement 303, wobei der Hinterschnitt 16 erkennbar wird, in den die Vorderkante 17 des Verbindungselements 311 wirkmässig eingreift.

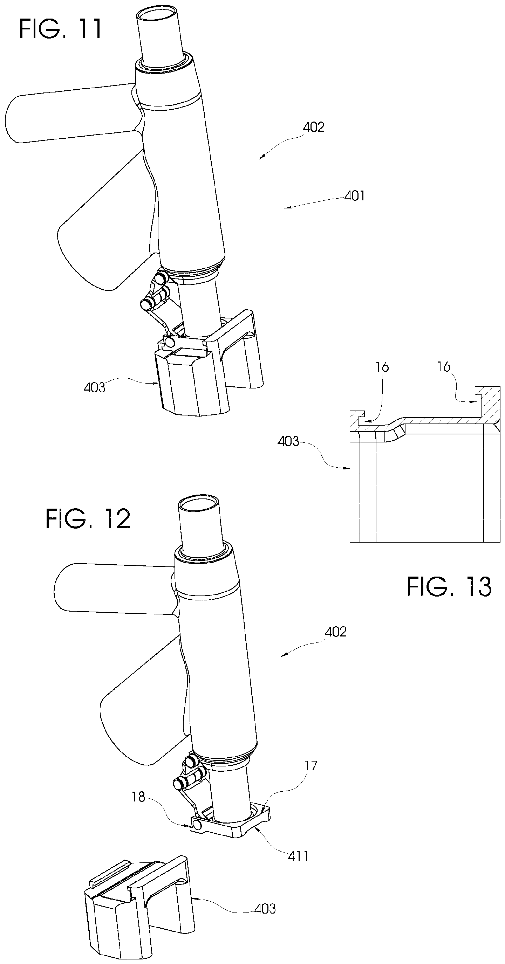

Figur 11 zeigt eine weitere Ausführungsform der erfindungsgemässen Vorderradführung 1 in Betriebszustand ohne Schutzvorrichtung 14, das Gabelelement 403 nur als deren oberes Ende dargestellt.

Figur 12 zeigt die erfindungsgemässe Vorderradführung 1 aus Figur 11 mit von der oberen Baugruppe 402 getrennten Gabelelement 403, wobei sowohl die Vorderkante 17 wie auch die Hinterkante 18 der Verbindungseinrichtung 411 sichtbar wird. Ferner ist zu erkennen, dass die Verbindung beider Baugruppen durch seitliches Einschieben ineinander erfolgt.

Figur 13 zeigt den Schnitt durch das Gabelelement 403, wobei Hinterschnitte 16 sowohl im vorderen wie auch im hinteren Bereich erkennbar werden, in den die Vorderkante 17 wie auch die Hinterkante 18 des Verbindungselements 411 wirkmässig eingreifen.

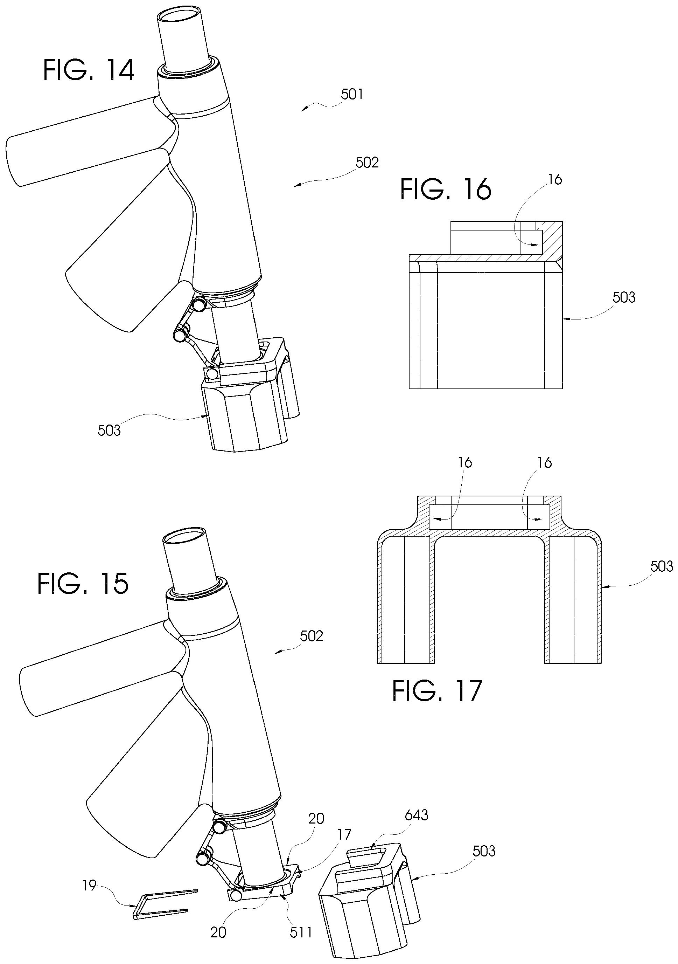

Figur 14 zeigt eine weitere Ausführungsform der erfindungsgemässen Vorderradführung 1 in Betriebszustand ohne Schutzvorrichtung 14, das Gabelelement 503 nur als deren oberes Ende dargestellt.

Figur 15 zeigt die erfindungsgemässe Vorderradführung 1 aus Figur 14 mit von der oberen Baugruppe 502 getrenntem Gabelelement 503, wobei sowohl die Vorderkante 17 wie auch die Seitenkanten 20 der Verbindungseinrichtung 511 sichtbar werden. Hierdurch wird die Kraftübertragung durch ein umlaufendes Kragenelement 643 erreicht. Ferner ist zu erkennen, dass von hinten ein Keil 19 zwischen Verbindungseinrichtung 511 und Gabelelement 503 eingeführt werden kann, um die beschriebenen Elemente wirkmässig über eine grosse Kontaktfläche miteinander zu verspannen.

Figur 16 zeigt den Schnitt in Fahrtrichtung durch das Gabelelement 503, wobei der Hinterschnitt 16 im vorderen Bereich erkennbar wird, in den die Vorderkante 17 des Verbindungselements 511 wirkmässig eingreift.

Figur 17 zeigt den Schnitt lotrecht zur Fahrtrichtung durch das Gabelelement 503, wobei Hinterschnitte 16 in beiden seitlichen Bereichen erkennbar werden, in den die Seitenkanten 20 des Verbindungselements 511 wirkmässig eingreifen.

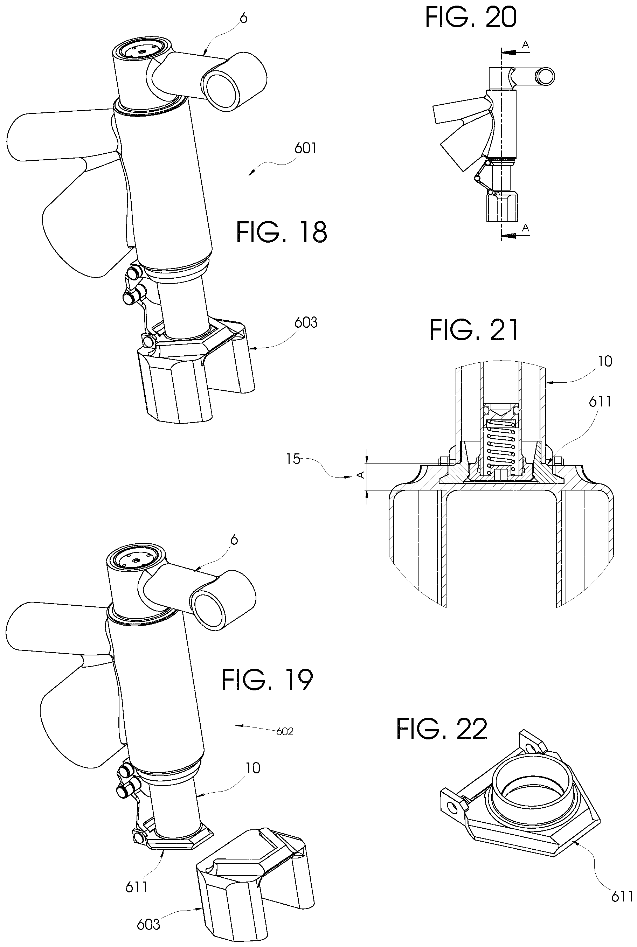

Figur 18 zeigt eine weitere Ausführungsform der erfindungsgemässen Vorderradführung 1 in Betriebszustand ohne Schutzvorrichtung 14, das Gabelelement 603 nur als deren oberes Ende dargestellt.

Figur 19 zeigt die erfindungsgemässe Vorderradführung 1 aus Figur 18 mit von der oberen Baugruppe 602 getrenntem Gabelelement 603, wobei Seitenkanten des Verbindungselements 611 nach vorne konisch zusammenlaufen. Das Gabelelement 603 besitzt eine entsprechend konisch zusammenlaufende Aufnahme.

Figur 20 zeigt die Seitenansicht der Ausführung gemäss Figur 18 mit Angabe eine Schnittebene A-A.

Figur 21 zeigt ein Detail des Schnitts gemäss Figur 20. Durch die gleichzeitige Konizität von Verbindungselement 611 sowie entsprechender Aussparung in dem Gabelelement 603 sowohl in horizontaler als auch vertikaler Richtung wird eine sichere Verbindung zwischen beiden Baugruppen auch beim Auftreten grösser werdender Fertigungstoleranzen gewährleistet. Ferner wird durch die erfindungsgemässe Ausführung ein besonders geringer Abstand in vertikaler Richtung zwischen unterem freistehenden Ende des inneren Elements 10 und Oberkante der Radfreigängigkeit des Gabelelements 603 erreicht.

Figur 22 zeigt eine vergrösserte Darstellung des Verbindungselements 611.

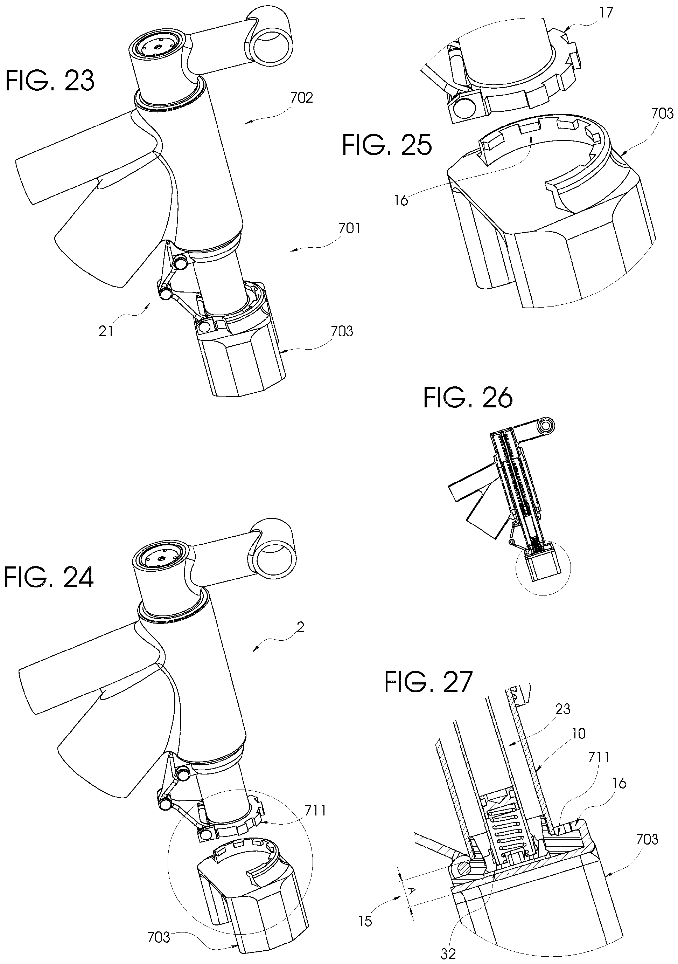

Figur 23 zeigt eine weitere Ausführungsform der erfindungsgemässen Vorderradführung 1 in Betriebszustand ohne Schutzvorrichtung 14, das Gabelelement 703 nur als dessen oberes Ende dargestellt. In dieser Ausführungsform erfolgt die Verbindung von oberer Baugruppe 702 und Gabelelement 703 durch ein bayonettartiges Ineinanderfügen und Verdrehen um die Längsachse um einen definierten Winkel.

Figur 24 zeigt die erfindungsgemässe Vorderradführung 1 aus Figur 23 mit von der oberen Baugruppe 702 getrenntem Gabelelement 703. Die zum Zusammenfügen nötige Winkelveränderung gegenüber der Endlage ist hier erkennbar.

Figur 25 zeigt die Detailansicht aus Figur 24. Die im Betriebszustand zusammenwirkenden Hinterschnitte 16 und Vorderkanten 17 werden hier deutlich.

Figur 26 zeigt die Schnittansicht der Ausführung gemäss Figur 23 mit Angabe einer Detailansicht.

Figur 27 zeigt die Detailansicht aus Figur 26. Die formschlüssige Verbindung zwischen Hinterschnitt 16 und Vorderkante 17 des Verbindungselements 711 wird hier noch einmal dargestellt. Auch in dieser Ausführungsform ist der gegenüber dem Stand der Technik deutlich verringerte Abstand in vertikaler Richtung 15 zu erkennen.

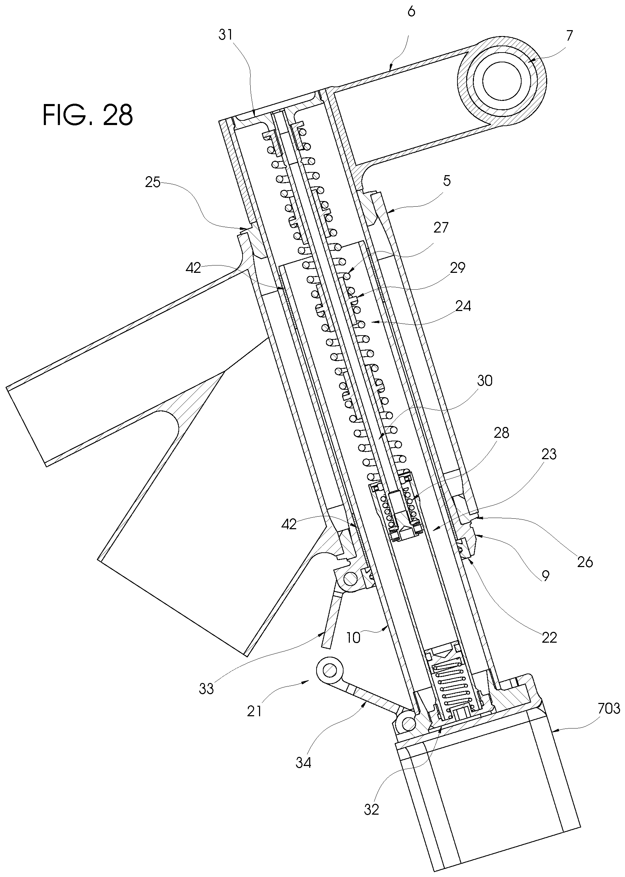

Figur 28 zeigt den Schnitt in Fahrtrichtung durch die Ausführungsform gemäss Figur 23 im ausgefederten Zustand. Die zuvor gezeigten Ausführungsformen unterscheiden sich im Wesentlichen hiervon nur in der Ausprägung des Verbindungselements sowie der unteren Baugruppe. Der Innenschaft 10 wird im äusseren Element 9 über Lagerungen 42 axial geführt. Der Aussenschaft 9 wird im Hauptrahmen 5 über eine obere Lagerung 25 sowie eine untere Lagerung 26 gehalten. Im Inneren der oberen Baugruppe befindet sich bevorzugt eine Federvorrichtung 24 sowie besonders bevorzugt eine Federvorrichtung 24 und eine Dämpfungsvorrichtung 23. In der vorliegenden Ausführungsform besteht die Federvorrichtung aus mehreren in Reihe geschalteten Positiv-Federn 27, welche durch Federführungen 29 auf der Kolbenstange 30 geführt sind sowie einer Negativ-Feder 28, welche sich im Inneren der Dämpfungsvorrichtung 23 befindet. Durch die Verwendung der Federführungen wird eine mögliche Beschädigung der Kolbenstange durch ausknickende Federn vermieden. Die Federvorrichtung 24 ist in dieser Ausführungsform mit der Dämpfungsvorrichtung in Reihe aufgebaut. Hierdurch kann der Durchmesser der Federn kleiner und damit leichter gehalten werden, als wenn die Federn um die Dämpfungsvorrichtung herumgeführt werden müssten. Die Federvorrichtung bzw. die Federvorrichtung und Dämpfungsvorrichtung sind am oberen Ende über den Deckel 31 mit dem Bereich des oberen Endes des äusseren Elements 9, sowie am unteren Ende mit dem Verbindungselement 11, 111, ff. verbunden. Weitere bevorzugte Ausführungsformen der Federvorrichtung sind auch lediglich eine einzelne Positiv-Feder, die als Stahl oder Titanfeder ausgeprägt ist sowie einzelne oder mehrere Elastomerfedern zum Einsatz kommen. Besonders bevorzugt ist auch die Verwendung von Gasfedern bei Positiv- und/oder Negativ-Feder. Die Dämpfungsvorrichtung besitzt in dieser Ausführungsform eine Ölfüllung. Bevorzugt und angedacht sind aber auch weitere Dämpfungsmedien wie andere Fluide oder Gase. Im Bereich des unteren Endes des äusseren Elements 9 ist ein Dichtungsvorrichtung 22 angebracht, welche auf der Aussenfläche des inneren Elements gleitend dichtet. Dies verhindert zum einen ein Eindringen von Fremdstoffen in den Bereich der Lagerungen 42, zum anderen hält sie eingebrachtes Schmiermittel im Innenraum zwischen Innenschaft 10 und Aussenschaft 9. Die Übertragung der Lenkkräfte erfolgt im Wesentlichen nur über die Sicherungseinrichtung 21, welche eine Winkelveränderung um die Längsachse zwischen Innenschaft 10 und Aussenschaft 9 im wesentliche unterbindet. Die Sicherungseinrichtung ist hier als Kniehebel ausgeführt, welcher aus einem oberen Hebel 33 und einem unteren Hebel 34 besteht.

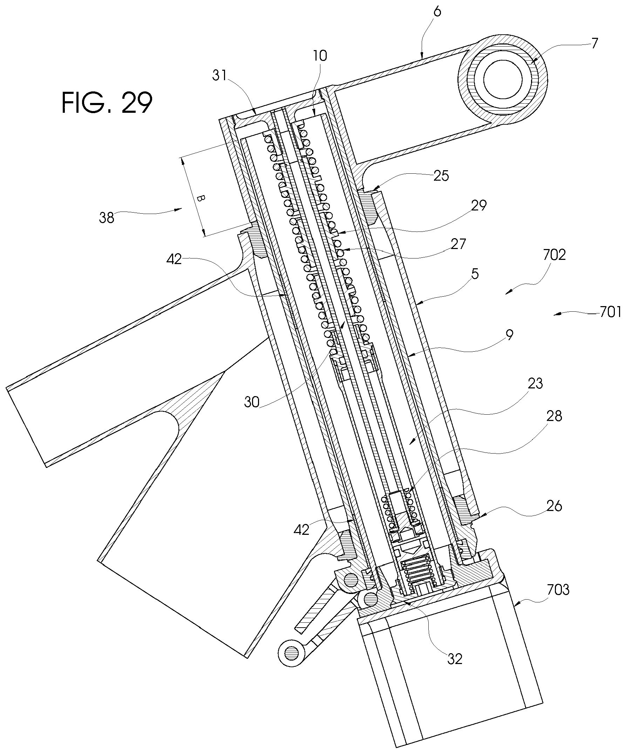

Figur 29 zeigt die Ausführungsform gemäss Fig. 28 in vollständig eingefahrenem Zustand. Der Innenschaft 10 tritt hierbei axial nach oben über die obere Lagereinrichtung 25 heraus. Bevorzugt wird die hieraus resultierende Überlappung 38 von Innenschaft 10 und Kontaktbereich zwischen Aussenschaft 9 und Verbindungseinrichtung 6 möglichst gross ausgeführt, da hierdurch ein möglichst grosser Abstand der Lagerungen 42 und dadurch eine besonders steife Konstruktion erreicht wird.

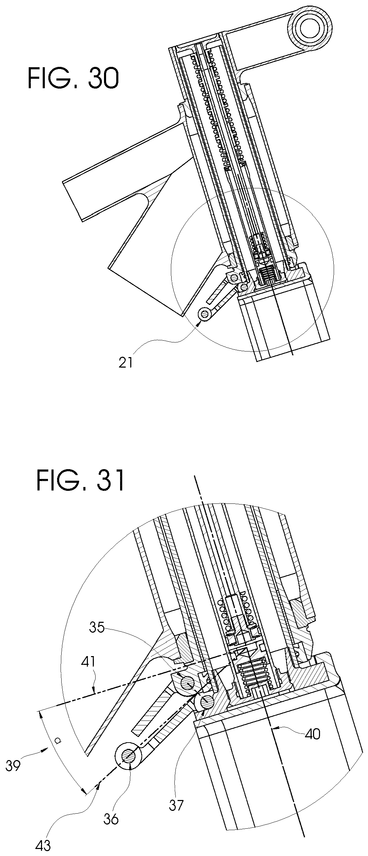

Figur 30 zeigt die Ausführungsform gemäss Fig. 29 mit Darstellung eines Ausschnitts.

Figur 31 zeigt den Detailausschnitt aus Fig. 30. Durch radial zur Längsachse 40 der oberen Einheit unterschiedlich beabstandete Achsen 35, 37. Hierdurch wird beim Einfedern ein Abwinkeln der beiden Hebel nach unten bewirkt, um somit eine Kollision mit dem Hauptrahmen zu vermeiden. In einer weiteren bevorzugten Ausführungsform ist der obere Hebelarm 33 länger als der untere Hebelarm 34, um ein entsprechendes Abkippen der Hebel nach unten, weg vom Hauptrahmen 5, zu bewerkstelligen. Hierbei entsteht zwischen der Winkelhalbierenden 43 des durch obere Hebelachse 35, mittlere Hebelachse 36 sowie untere Hebelachse 37 gebildeten Winkels sowie der Lotrechten 41 auf die Mittelachse 40 ein Winkel von bevorzugt mindestens 10°, besonders bevorzugt mindestens 20°.

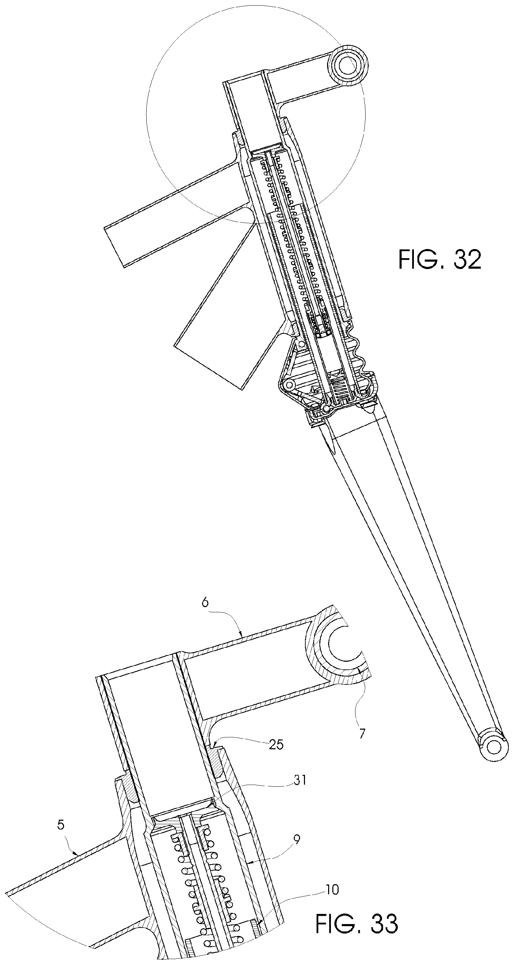

Figur 32 zeigt die Ausführungsform gemäss Fig.1 im Längsschnitt in Fahrtrichtung.

Figur 33 zeigt einen Detailausschnitt aus Fig. 32. Bei besonders langen Steuerrohren des Hauptrahmens 5 kann bevorzugt auch ein Aufbau erfolgen, bei dem der Deckel 31, welcher zur Kraftübertragung der Federeinrichtung 24 auf den Aussenschaft 9 dient, nicht im Bereich des oberen Endes des äusseren Elements 9 mit diesem verbunden ist, sondern hiervon nach unten beabstandet. Hierdurch kann ein oberer Abschnitt des Aussenschafts 9 im Querschnitt verringert ausgeführt werden und somit eine obere Lagervorrichtung 25 sowie Verbindungseinrichtung 6 mit kleinerem Durchmesser verwandt werden, womit eine Gewichtsreduzierung erzielt werden sowie auf standardisierte Bauelemente zurückgegriffen werden kann.

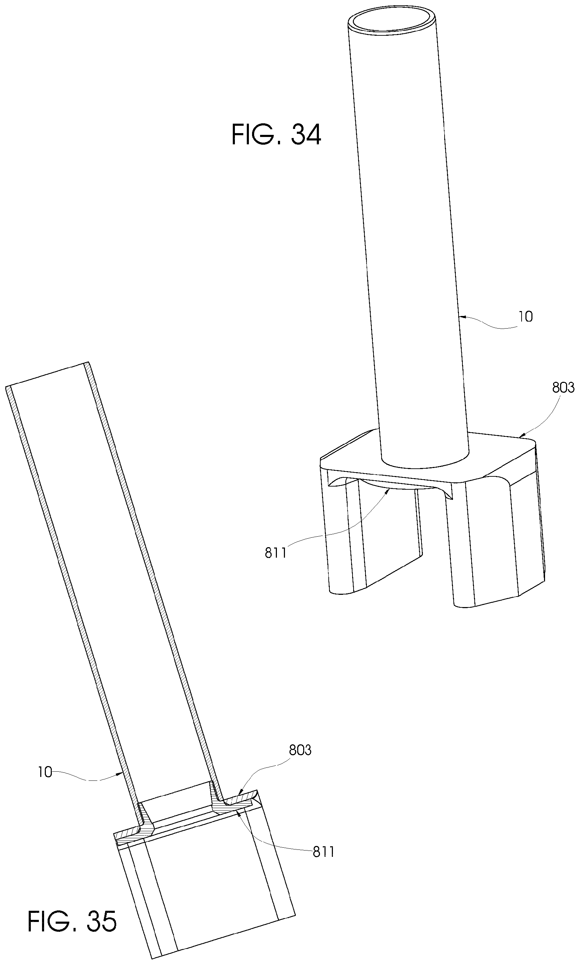

Figur 34 zeigt eine bevorzugte Ausführungsform, analog zu den Fig. 4 + 5 lediglich als relevante Elemente der Kraftübertragung zwischen oberer Baugruppe 2 und unterer Baugruppe 3 einer erfindungsgemässen Vorderradführung. Das Verbindungselement 811 wird hier von unten z.B. durch Kleben oder Löten mit dem Gabelelement 803 verbunden.

Figur 35 zeigt den Schnitt durch die erfindungsgemässe Ausführung im Längsschnitt in Fahrtrichtung.

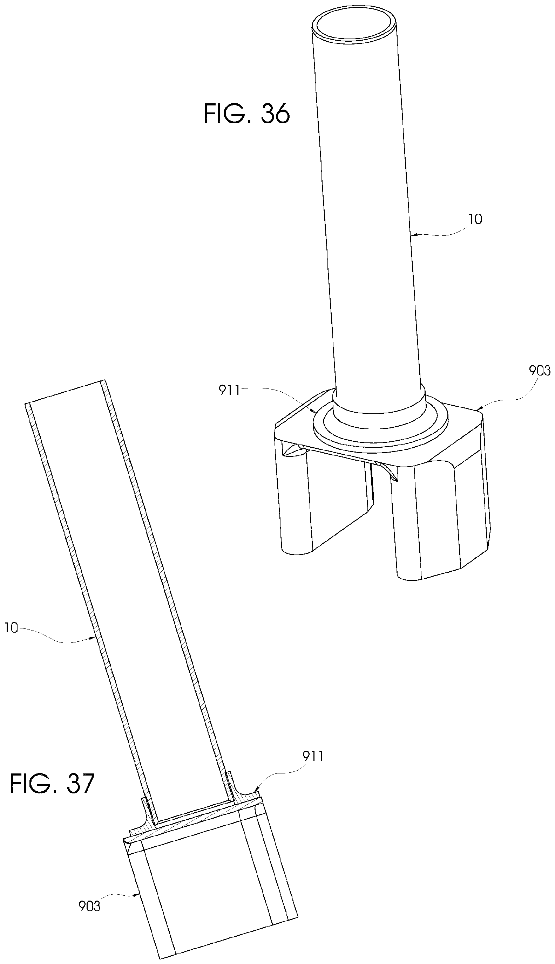

Figur 36 zeigt eine letzte bevorzugte Ausführungsform, analog zu den Fig. 4 + 5 lediglich als relevante Elemente der Kraftübertragung zwischen oberer Baugruppe 2 und Gabelelement 3 einer erfindungsgemässen Vorderradführung. Das Verbindungselement 911 ist hier von aussen mit dem Innenschaft 10 verbunden. Der Innenschaft 10 kann wie im vorliegenden Beispiel schon oberhalb des Gabelelements 903 enden, da die Kraftübertragung von dem Gabelelement 903 auf den Innenschaft 10 im Wesentlichen über das Verbindungselement 911 erfolgt. Vorteilhaft an dieser Ausführungsform ist das Fehlen jeglicher Innenbearbeitung am Innenschaft 10. Hierdurch kann dieser in einem vereinfachten Fertigungsverfahren aus einem stangenförmigen Profil erstellt werden.

Figur 37 zeigt den Schnitt durch die erfindungsgemässe Ausführung der Figur 36 im Längsschnitt in Fahrtrichtung.

Ergänzend ist darauf hinzuweisen, dass "umfassend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Vorderradführung
- 2: obere Baugruppe
- 3: Gabelelement
- 4: Vorderradführung
- 5: Rahmen
- 6: Verbindungseinrichtung
- 7: Lenkeinrichtung
- 8: Radachse
- 9: Aussenschaft
- 10: Innenschaft
- 11: Verbindungselement
- 12: Fixierelement
- 13: Öffnung für Fixierelement
- 14: Schutzvorrichtung
- 15: Abstand in vertikaler Richtung
- 16: Hinterschnitt
- 17: Vorderkante
- 18: Hinterkante
- 19: Keil
- 20: seitliche Kante
- 21: Sicherungseinrichtung
- 22: Dichtungselement
- 23: Dämpfungsvorrichtung
- 24: Federvorrichtung
- 25: obere Lagereinrichtung
- 26: untere Lagereinrichtung
- 27: Positiv-Feder
- 28: Negativ-Feder
- 29: Federführung
- 30: Kolbenstange
- 31: Deckel
- 32: Boden
- 33: oberer Hebel
- 34: unterer Hebel
- 35: obere Hebelachse
- 36: mittlere Hebelachse
- 37: untere Hebelachse
- 38: Überlappung
- 39: Winkel
- 40: Mittelachse
- 41: Lotrechte
- 42: Lagerung
- 43: Winkelhalbierende

- 101: Vorderradführung
- 103: Gabelelement
- 111: Verbindungselement
- 112: Fixierelement

- 201: Vorderradführung
- 203: Gabelelement
- 211: Verbindungselement
- 212: Fixierelement
- 213: Öffnung für Fixierelement

- 301: Vorderradführung
- 303: Gabelelement
- 311: Verbindungselement
- 312: Fixierelement

- 401: Vorderradführung
- 403: Gabelelement
- 411: Verbindungselement

- 501: Vorderradführung
- 503: Gabelelement
- 511: Verbindungselement

- 601: Vorderradführung
- 603: Gabelelement
- 611: Verbindungselement
- 701: Vorderradführung
- 703: Gabelelement
- 711: Verbindungselement

- 803: Gabelelement
- 811: Verbindungselement

- 903: Gabelelement
- 911: Verbindungselement

## Patentansprüche

1. Ein Gabelsystem (1, 101, 201, 301, 401, 501, 601, 701) für ein zumindest teilweise muskelkraftbetriebenes Fahrrad, umfassend:
- einen Innenschaft (10),
- ein Verbindungselement (11, 111, 211, 311, 411, 511, 611, 711, 811, 911), und
- ein Gabelelement (3, 103, 203, 303, 403, 503, 603, 703, 803, 903),
wobei das Verbindungselement (11, 111, 211, 311, 411, 511, 611, 711, 811, 911) ein erstes Ende zur Verbindung mit dem Innenschaft (10) und ein zweites Ende zur Verbindung mit dem Gabelelement (3, 103, 203, 303, 403, 503, 603, 703, 803, 903) aufweist, und
wobei das zweite Ende eine größere radiale Ausdehnung als das erste Ende und als der Innenschaft (10) aufweist,
- eine Sicherungseinheit (21), die ein Kniehebel ist,
wobei deren erster Hebelarm (33) an einem Aussenschaft (9) befestigt ist und deren zweiter Hebelarm (34) am Verbindungselement (11, 111, 211, 311, 411, 511, 611, 711, 811, 911) befestigt ist,
wobei die Sicherungseinheit (21) eine obere Hebelachse (35), eine mittlere Hebelachse (36) sowie untere Hebelachse (37) aufweist,
wobei der Innenschaft (10) axial beweglich zumindest teilweise in den Aussenschaft (9) gesteckt ist, und
wobei die Sicherungseinheit (21) eine Rotation zwischen dem Aussenschaft (9) und dem Gabelelement (3, 103, 203, 303, 403, 503, 603, 703, 803, 903) verhindert,
**dadurch gekennzeichnet, dass**
eine Mittelachse (43) der drei Hebelachsen (35, 36, 37) der beiden Hebelarme (33, 34) in vollständig eingeklappter Position relativ zu einer Lotrechten (41) zu einer Längsachse (40) des Innenschafts (10) um einen Winkel (a) von mindestens 10° nach unten (39) in Richtung des Gabelelements (3, 103, 203, 303, 403, 503, 603, 703, 803, 903) abweicht.

2. Gabelsystem (1, 101, 201, 301, 401, 501, 601, 701) nach Anspruch 1, wobei das Verbindungselement (11, 111, 211, 311, 411, 511, 611, 711, 811, 911) ein separates Bauteil ist.

3. Gabelsystem (1, 101, 201, 301, 401, 501, 601, 701) nach Anspruch 1 oder 2, wobei das zweite Ende des Verbindungselements (11, 111, 211, 311, 411, 511, 611, 711, 811, 911) lösbar an dem Gabelelement (3, 103, 203, 303, 403, 503, 603, 703, 803, 903) befestigt ist.

4. Gabelsystem (1, 101, 201, 301, 401, 501, 601, 701) nach Anspruch 3, wobei die lösbare Verbindung eine Steckverbindung ist.

5. Gabelsystem (1, 101, 201, 301, 401, 501, 601, 701) nach Anspruch 3, wobei die lösbare Verbindung eine Bajonettverbindung ist.

6. Gabelsystem (1, 101, 201, 301, 401, 501, 601, 701) nach Anspruch 1, wobei der erste Hebelarm (33) des Kniehebels länger ist als der zweite Hebelarm (34).

7. Gabelsystem (1, 101, 201, 301, 401, 501, 601, 701) nach Anspruch 1, wobei sich der Aussenschaft (9) in Richtung des Fahrradlenkers verjüngt.

8. Gabelsystem (1, 101, 201, 301, 401, 501, 601, 701) nach einem der vorherigen Ansprüche, wobei ein Abstand (15) zwischen einem Ende des Innenschafts (10) und einer Oberkante einer Raddurchgangsöffnung des Gabelelements (3, 103, 203, 303, 403, 503, 603, 703, 803, 903) kleiner als 20 mm und bevorzugt kleiner als 10 mm ist.

9. Gabelsystem (1, 101, 201, 301, 401, 501, 601, 701) nach einem der vorherigen Ansprüche, wobei das Verbindungselement (11, 111, 211, 311, 411, 511, 611, 711, 811, 911) aus einem Material ist, welches einen mindestens 20 % höheren E-Modul aufweist als das Material des Gabelelements (3, 103, 203, 303, 403, 503, 603, 703, 803, 903).

10. Gabelsystem (1, 101, 201, 301, 401, 501, 601, 701) nach Anspruch 1, wobei der Aussenschaft (9) im Bereich einer Lagerung (25) in einem Teil eines Fahrradrahmens (5) einen Aussendurchmesser größer 32 mm, bevorzugt größer 35 mm und weiter bevorzugt größer 40 mm aufweist.

11. Gabelsystem (1, 101, 201, 301, 401, 501, 601, 701) nach einem der vorherigen Ansprüche, wobei das Verbindungselement (11, 111, 211, 311, 411, 511, 611, 711, 811, 911) eine Kraftübertragung vom Innenschaft (10) erst radial nach außen und dann auf das Gabelelement (3, 103, 203, 303, 403, 503, 603, 703, 803, 903) erlaubt.

12. Gabelsystem (1, 101, 201, 301, 401, 501, 601, 701) nach einem der vorherigen Ansprüche, wobei sich ein oberes Ende des Innenschafts (10) in wenigstens einer Fahrposition oberhalb der Mitte eines Bereichs befindet, in dem eine Verbindungseinheit (6) zwischen dem Aussenschaft (9) und einer Lenkvorrichtung (7) mit dem Aussenschaft (9) in Wirkverbindung ist.

13. Eine Fahrradrahmenanordung für ein zumindest teilweise muskelkraftbetriebenes Fahrrad, umfassend:
- ein Gabelsystem (1, 101, 201, 301, 401, 501, 601, 701) nach einem der vorhergehenden Ansprüche, und
- einen Fahrradrahmen (5),
wobei das Gabelsystem (1, 101, 201, 301, 401, 501, 601, 701) relativ zum Fahrradrahmen drehbar ist, und
ein Gabelelement (3, 103, 203, 303, 403, 503, 603, 703, 803, 903) des Gabelsystems (1, 101, 201, 301, 401, 501, 601, 701) relativ zum Fahrradrahmen (5) entlang einer Längsachse des Gabelsystems (1, 101, 201, 301, 401, 501, 601, 701) verschiebbar gelagert ist.

14. Ein Herstellungsverfahren für das Gabelsystem (1, 101, 201, 301, 401, 501, 601, 701), gemäß Anspruch 1, umfassend die folgenden Schritte:
- Anfügen des ersten Endes des Verbindungselements (11, 111, 211, 311, 411, 511, 611, 711, 811, 911) an den Innenschaft (10),
- Verbinden des zweiten Endes des Verbindungselements (11, 111, 211, 311, 411, 511, 611, 711, 811, 911) mit dem Gabelelement (3, 103, 203, 303, 403, 503, 603, 703, 803, 903),
wobei das zweite Ende eine größere radiale Ausdehnung als das erste Ende und als der Innenschaft (10) aufweist,
- Befestigen des ersten Hebelarms (33) des Kniehebels am Aussenschaft (9) und Befestigen des zweiten Hebelarms (34) des Kniehebels am Verbindungselement (11, 111, 211, 311, 411, 511, 611, 711, 811, 911), und
- Einstellen einer Mittelachse (43) der drei Hebelachsen (35, 36, 37) der beiden Hebelarme (33, 34), die in vollständig eingeklappter Position relativ zu einer Lotrechten (41) zu einer Längsachse (40) des Innenschafts (10) um einen Winkel (a) von mindestens 10° nach unten (39) in Richtung des Gabelelements (3, 103, 203, 303, 403, 503, 603, 703, 803, 903) abweicht.

## Claims

1. A fork system (1, 101, 201, 301, 401, 501, 601, 701) for an at least partially muscle-powered bicycle, comprising:
- an inner shaft (10),
- a connecting element (11, 111, 211, 311, 411, 511, 611, 711, 811, 911), and
- a fork element (3, 103, 203, 303, 403, 503, 603, 703, 803, 903),
wherein the connecting element (11,111, 211, 311, 411, 511, 611, 711, 811, 911) has a first end for connecting to the inner shaft (10) and a second end for connecting to the fork element (3, 103, 203, 303, 403, 503, 603, 703, 803, 903), and the second end has a larger radial extent than the first end and than the inner shaft (10),
- a securing unit (21) which is a toggle joint,
wherein its first lever arm (33) is fixed to an outer shaft (9) and its second lever arm (34) is fixed to the connecting element (11, 111, 211, 311, 411, 511, 611, 711, 811, 911), wherein the securing unit (21) has an upper lever axis (35), a central lever axis (36) and a lower lever axis (37), wherein the inner shaft (10) is inserted at least partially into the outer shaft (9) in an axially displaceable manner, and
wherein the securing unit (21) prevents rotation between the outer shaft (9) and the fork element (3, 103, 203, 303, 403, 503, 603, 703, 803, 903),
**characterised in that**
a centre axis (43) of the three lever axes (35, 36, 37) on the two lever arms (33, 34) in the fully folded position relative to a perpendicular (41) to a longitudinal axis (40) of the inner shaft (10) deviates by an angle (a) of at least 10° downwards (39) towards the fork element (3, 103, 203, 303, 403, 503, 603, 703, 803, 903).

2. Fork system (1, 101, 201, 301, 401, 501, 601, 701) according to claim 1, wherein the connecting element (11, 111, 211, 311, 411, 511, 611, 711, 811, 911) is a separate component.

3. Fork system (1, 101, 201, 301, 401, 501, 601, 701) according to claim 1 or 2, wherein the second end of the connecting element (11, 111, 211, 311, 411, 511, 611, 711, 811, 911) is fixed detachably to the fork element (3,103, 203, 303, 403, 503, 603, 703, 803, 903).

4. Fork system (1, 101, 201, 301, 401, 501, 601, 701) according to claim 3, wherein the detachable connection is a plug-in connection.

5. Fork system (1, 101, 201, 301, 401, 501, 601, 701) according to claim 3, wherein the detachable connection is a bayonet connection.

6. Fork system (1, 101, 201, 301, 401, 501, 601, 701) according to claim 1, wherein the first lever arm (33) of the toggle joint is longer than the second lever arm (34).

7. Fork system (1, 101, 201, 301, 401, 501, 601, 701) according to claim 1, wherein the outer shaft (9) tapers towards the bicycle handlebars.

8. Fork system (1, 101, 201, 301, 401, 501, 601, 701) according to any one of the preceding claims, wherein a distance (15) between an end of the inner shaft (10) and an upper edge of a gap for the wheel in the fork element (3, 103, 203, 303, 403, 503, 603, 703, 803, 903) is less than 20 mm and preferably less than 10 mm.

9. Fork system (1, 101, 201, 301, 401, 501, 601, 701) according to any one of the preceding claims, wherein the connecting element (11,111, 211, 311, 411, 511, 611, 711, 811, 911) comprises a material which has an at least 20% higher modulus of elasticity than the material of the fork element (3, 103, 203, 303, 403, 503, 603, 703, 803, 903).

10. Fork system (1, 101, 201, 301, 401, 501, 601, 701) according to claim 1, wherein the outer shaft (9) in the region of a bearing (25) in a portion of a bicycle frame (5) has an outer diameter greater than 32 mm, preferably greater than 35 mm and more preferably greater than 40 mm.

11. Fork system (1, 101, 201, 301, 401, 501, 601, 701) according to any one of the preceding claims, wherein the connecting element (11,111, 211, 311, 411, 511, 611, 711, 811, 911) allows transmission of power from the inner shaft (10) firstly radially outwards and then on to the fork element (3, 103, 203, 303, 403, 503, 603, 703, 803, 903).

12. Fork system (1, 101, 201, 301, 401, 501, 601, 701) according to any one of the preceding claims, wherein an upper end of the inner shaft (10) is located in at least a riding position above the centre of a region in which a connecting unit (6) between the outer shaft (9) and a steering device (7) is in operative connection with the outer shaft (9).

13. A bicycle frame assembly for an at least partially muscle-powered bicycle, comprising:
- a fork system (1, 101, 201, 301, 401, 501, 601, 701) according to any one of the preceding claims, and
- a bicycle frame (5),
wherein the fork system (1, 101, 201, 301, 401, 501, 601, 701) is rotatable relative to the bicycle frame, and
a fork element (3, 103, 203, 303, 403, 503, 603, 703, 803, 903) of the fork system (1, 101, 201, 301, 401, 501, 601, 701) is supported displaceably relative to the bicycle frame (5) on a longitudinal axis of the fork system (1, 101, 201, 301, 401, 501, 601, 701).

14. A method of producing the fork system (1, 101, 201, 301, 401, 501, 601, 701) according to claim 1, comprising the following steps:
- attaching the first end of the connecting element (11,111, 211, 311, 411, 511, 611, 711, 811, 911) to the inner shaft (10),
- connecting the second end of the connecting element (11, 111, 211, 311, 411, 511, 611, 711, 811, 911) to the fork element (3, 103, 203, 303, 403, 503, 603, 703, 803, 903),
wherein the second end has a greater radial extent than the first end and than the inner shaft (10),
- fixing the first lever arm (33) of the toggle joint to the outer shaft (9) and fixing the second lever arm (34) of the toggle joint to the connecting element (11, 111, 211, 311, 411, 511, 611, 711, 811, 911), and
- adjusting a centre axis (43) of the three lever axes (35, 36, 37) of the two lever arms (33, 34) which deviates in the fully folded position relative to a perpendicular (41) to a longitudinal axis (40) of the inner shaft (10) by an angle (a) of at least 10° downwards (39) towards the fork element (3, 103, 203, 303, 403, 503, 603, 703, 803, 903).

## Revendications

1. Système de fourche (1, 101, 201, 301, 401, 501, 601, 701) pour un vélo actionné au moins partiellement par la force musculaire, comprenant :
- un arbre intérieur (10),
- un élément de liaison (11, 111, 211, 311, 411, 511, 611, 711, 811, 911) et
- un élément en forme de fourche (3, 103, 203, 303, 403, 503, 603, 703, 803, 903),
dans lequel l'élément de liaison (11, 111, 211, 311, 411, 511, 611, 711, 811, 911) présente une première extrémité pour la liaison avec l'arbre intérieur (10) et une deuxième extrémité pour la liaison avec l'élément en forme de fourche (3, 103, 203, 303, 403, 503, 603, 703, 803, 903) et la deuxième extrémité présente une extension radiale plus grande que la première extrémité et que l'arbre intérieur (10),
- une unité de fixation (21) qui est un levier coudé, dont le premier bras de levier (33) est fixé à un arbre extérieur (9) et le deuxième bras de levier (34) est fixé à l'élément de liaison (11, 111, 211, 311, 411, 511, 611, 711, 811, 911),
dans lequel l'unité de fixation (21) présente un axe de levier supérieur (35), un axe de levier intermédiaire (36) et un axe de levier inférieur (37),
dans lequel l'arbre intérieur (10) est inséré au moins partiellement dans l'arbre extérieur (9) de manière axialement mobile et
dans lequel l'unité de fixation (21) empêche une rotation entre l'arbre extérieur (9) et l'élément en forme de fourche (3, 103, 203, 303, 403, 503, 603, 703, 803, 903), **caractérisé en ce**
**qu'**un axe médian (43) des trois axes de levier (35, 36, 37) des deux bras de levier (33, 34) s'écarte, en position complètement repliée, d'un angle (a) d'au moins 10° vers le bas (39) en direction de l'élément en forme de fourche (3, 103, 203, 303, 403, 503, 603, 703, 803, 903) par rapport à une perpendiculaire (41) à un axe longitudinal (40) de l'arbre intérieur (10).

2. Système de fourche (1, 101, 201, 301, 401, 501, 601, 701) selon la revendication 1, dans lequel l'élément de liaison (11, 111, 211, 311, 411, 511, 611, 711, 811, 911) est un composant séparé.

3. Système de fourche (1, 101, 201, 301, 401, 501, 601, 701) selon la revendication 1 ou 2, dans lequel la deuxième extrémité de l'élément de liaison (11, 111, 211, 311, 411, 511, 611, 711, 811, 911) est fixée de manière amovible sur l'élément en forme de fourche (3, 103, 203, 303, 403, 503, 603, 703, 803, 903).

4. Système de fourche (1, 101, 201, 301, 401, 501, 601, 701) selon la revendication 3, dans lequel la liaison amovible est une liaison enfichable.

5. Système de fourche (1, 101, 201, 301, 401, 501, 601, 701) selon la revendication 3, dans lequel la liaison amovible est une liaison à baïonnette.

6. Système de fourche (1, 101, 201, 301, 401, 501, 601, 701) selon la revendication 1, dans lequel le premier bras de levier (33) du levier coudé est plus long que le deuxième bras de levier (34).

7. Système de fourche (1, 101, 201, 301, 401, 501, 601, 701) selon la revendication 1, dans lequel l'arbre extérieur (9) se rétrécit en direction du guidon de vélo.

8. Système de fourche (1, 101, 201, 301, 401, 501, 601, 701) selon l'une des revendications précédentes, dans lequel une distance (15) entre une extrémité de l'arbre intérieur (10) et un bord supérieur d'une ouverture de passage de roue de l'élément en forme de fourche (3, 103, 203, 303, 403, 503, 603, 703, 803, 903) est inférieure à 20 mm et de préférence inférieure à 10 mm.

9. Système de fourche (1, 101, 201, 301, 401, 501, 601, 701) selon l'une des revendications précédentes, dans lequel l'élément de liaison (11, 111, 211, 311, 411, 511, 611, 711, 811, 911) est constitué d'un matériau qui présente un module d'élasticité supérieur d'au moins 20 % à celui du matériau de l'élément en forme de fourche (3, 103, 203, 303, 403, 503, 603, 703, 803, 903).

10. Système de fourche (1, 101, 201, 301, 401, 501, 601, 701) selon la revendication 1, dans lequel l'arbre extérieur (9) présente dans la zone d'un palier (25) dans une partie d'un cadre de vélo (5) un diamètre extérieur supérieur à 32 mm, de préférence supérieur à 35 mm et davantage de préférence supérieur à 40 mm.

11. Système de fourche (1, 101, 201, 301, 401, 501, 601, 701) selon l'une des revendications précédentes, dans lequel l'élément de liaison (11, 111, 211, 311, 411, 511, 611, 711, 811, 911) permet une transmission des forces de l'arbre intérieur (10) d'abord radialement vers l'extérieur et ensuite à l'élément en forme de fourche (3, 103, 203, 303, 403, 503, 603, 703, 803, 903).

12. Système de fourche (1, 101, 201, 301, 401, 501, 601, 701) selon l'une des revendications précédentes, dans lequel une extrémité supérieure de l'arbre intérieur (10) se trouve, dans au moins une position de déplacement, au-dessus du centre d'une zone dans laquelle une unité de liaison (6) entre l'arbre extérieur (9) et un dispositif de direction (7) est en liaison fonctionnelle avec l'arbre extérieur (9).

13. Ensemble cadre de vélo pour un vélo actionné au moins partiellement par la force musculaire, comprenant :
- un système de fourche (1, 101, 201, 301, 401, 501, 601, 701) selon l'une des revendications précédentes et
- un cadre de vélo (5),
dans lequel le système de fourche (1, 101, 201, 301, 401, 501, 601, 701) peut tourner par rapport au cadre de vélo et un élément en forme de fourche (3, 103, 203, 303, 403, 503, 603, 703, 803, 903) du système de fourche (1, 101, 201, 301, 401, 501, 601, 701) est monté coulissant par rapport au cadre de vélo (5) le long d'un axe longitudinal du système de fourche (1, 101, 201, 301, 401, 501, 601, 701).

14. Procédé de fabrication du système de fourche (1, 101, 201, 301, 401, 501, 601, 701) selon la revendication 1, comprenant les étapes suivantes :
- montage de la première extrémité de l'élément de liaison (11, 111, 211, 311, 411, 511, 611, 711, 811, 911) sur l'arbre intérieur (10),
- liaison de la deuxième extrémité de l'élément de liaison (11, 111, 211, 311, 411, 511, 611, 711, 811, 911) avec l'élément en forme de fourche (3, 103, 203, 303, 403, 503, 603, 703, 803, 903),
la deuxième extrémité présentant une extension radiale plus grande que la première extrémité et que l'arbre intérieur (10),
- fixation du premier bras de levier (33) du levier coudé à l'arbre extérieur (9) et fixation du deuxième bras de levier (34) du levier coudé à l'élément de liaison (11, 111, 211, 311, 411, 511, 611, 711, 811, 911) et
- réglage d'un axe médian (43) des trois axes de levier (35, 36, 37) des deux bras de levier (33, 34) qui, en position complètement repliée, s'écarte d'un angle (a) d'au moins 10° vers le bas (39) en direction de l'élément en forme de fourche (3, 103, 203, 303, 403, 503, 603, 703, 803, 903) par rapport à une perpendiculaire (41) à un axe longitudinal (40) de l'arbre intérieur (10).
